# EUROPEAN PATENT SPECIFICATION

(11) **EP 3 246 805 B1**
(45) Date of publication and mention of the grant of the patent: **08.07.2020**
(21) Application number: 17153756.6
(22) Date of filing: 30.01.2017
(51) Int. Cl.: G06F 3/0485, G06F 3/0488

(54) **GESTURE OPERATION RESPONSE METHOD AND DEVICE**
GESTENOPERATIONSREAKTIONSVERFAHREN UND -VORRICHTUNG
PROCÉDÉ ET DISPOSITIF DE RÉACTION À UN GESTE

(30) Priority: 19.05.2016 CN 201610338960
(43) Date of publication of application: 22.11.2017
(73) Proprietor: Beijing Xiaomi Mobile Software Co., Ltd., Beijing 100085 (CN)
(72) Inventor: YANG, Kun, Haidian District, Beijing 100085 (CN); LI, Weixing, Haidian District, Beijing 100085 (CN); JI, Chuanshun, Haidian District, Beijing 100085 (CN)
(74) Representative: Sadler, Peter Frederick

(56) References cited:
- EP-A1- 2 879 039
- US-A1- 2014 139 471
- US-A1- 2014 306 899

## Description

### TECHNICAL FIELD

The present disclosure generally relates to the field of touch control, and more particularly, to a gesture operation response method and device.

### BACKGROUND

A touch sensing module may capture a gesture operation to obtain a movement trajectory of the gesture operation.

When a sliding gesture operation is sensed by a touch sensing module and the sliding gesture operation is determined to meet a reporting condition, the touch sensing module may report a swipe gesture event once. By taking page turning of a contact list as an example, a user is required to repeatedly swipe on a touch sensor, and a processor of smart equipment scrolls the contact list by a preset number of rows every time when the user swipes. In such a manner, the user is required to repeatedly swipe on the touch sensor when being required to continuously scroll contents, which is tedious in operation.

US Patent Application Publication No. 2014139471A1 discloses a process of scrolling an image on a user interface device configured to display the image on a display screen and enable a user to input with the user's finger touch on a touch screen in association with the displayed image.

US Patent Application Publication No. 2014306899A1 discloses techniques for providing a multidirectional swipe key for a virtual keyboard of a touch sensitive computing device.

European Patent Application Publication No. EP2879039A1 discloses an information processing device including a page feed unit configured to continuously feed pages in contents including a plurality of pages, and a display control unit configured to change the number of the pages to be displayed on a display screen according to an operation by a user when the pages are fed by the page feed unit.

### SUMMARY

Accordingly, the present disclosure provides a gesture operation response method and device, in accordance with claims which follow.

The invention is defined by the appended independent claims. Preferred embodiments are set out in the dependent claims. Embodiments that do not fall within the scope of the claims do not describe part of the invention.

According to a first aspect of the embodiment of the present disclosure, there is provided a gesture operation response method, which may be applied to smart equipment including a touch sensing module and a processor, the touch sensing module including a touch sensor, the method including that: the touch sensing module reports a maintenance gesture event to the processor when identifying that a time duration for which a finger stays at a contact point after swiping on the touch sensor reaches a preset time duration; and after the maintenance gesture event is received and before the touch sensing module identifies that the finger leaves the contact point, the processor executes, at preset time intervals, a last response operation of responding to a swipe gesture event reported by the touch sensing module, herein the swipe gesture event is an event generated from a swipe gesture of the finger before the finger stays at the contact point. The touch sensing module reports the maintenance gesture event to the processor after determining that the finger swipes and stays at the contact point for the preset time duration, and the processor repeatedly executes the response operation after the maintenance gesture event is received and before the finger leaves the touch sensor. Since the processor may continuously and repeatedly execute the response operation after the finger stays at the contact point, finger control is simplified, the problem of tedious operation caused by a requirement for repeated swiping of the finger on the touch sensor when contents are required to be continuously scrolled in a related technology is solved, and the effect of simplifying swipe operation of the finger is achieved.

The contact point can be any point on the screen. For example, the user may swipe a finger, or other touch implement, and after swiping hold the finger at a point on the screen for a predetermined period of time in order to repeat the result of the swipe gesture.

Optionally, the method may further include that: the touch sensing module measures a time duration for which a contact point is continuously touched when identifying that the finger touches the contact point on the touch sensor, and determines that the time duration for which the finger stays at the contact point reaches the preset time duration when the measured time duration reaches the preset time duration. The touch sensing module monitors contacts on the touch sensor, and may determine that a time duration for which the finger stays at a certain contact point reaches the preset time duration when monitoring that the contact point is continuously touched for the preset time duration, so that a basis is provided for determining the time duration for which the finger stays at the contact point.

Optionally, the method may further include that: the touch sensing module reports a raising gesture event to the processor when the touch sensing module monitors that the finger leaves the contact point and does not touch the touch sensor any more; and upon reception of the raising gesture event, the processor stops executing the step of executing at preset time intervals the last response operation of responding to the swipe gesture event reported by the touch sensing module. The touch sensing module sends the raising gesture event when monitoring that the finger leaves the contact point where it has stayed and does not trigger the touch sensor any more, and the processor stops repeatedly executing the response operation, so that the repeated response operation is automatically stopped when the finger leaves the touch sensor.

Optionally, the method may further include that: the touch sensing module monitors a fingerprint generated when the contact point is touched by the finger; and the touch sensing module determines that the finger leaves the contact point and does not touch the touch sensor any more when monitoring that the fingerprint generated when the contact point is touched disappears. The touch sensing module monitors the fingerprint generated when the contact point is touched to determine time when the finger leaves the contact point, and the time when the finger leaves the contact point may be determined when the fingerprint is not detected because the fingerprint is inevitably left at the contact point when the finger touches the contact point, so that correct determination about the time when the finger leaves the contact point is ensured.

Optionally, the step that the touch sensing module reports the maintenance gesture event to the processor when identifying that the time duration for which the finger stays at the contact point after swiping on the touch sensor reaches the preset time duration may include that: the touch sensing module reports the swipe gesture event corresponding to the swipe gesture to the processor when identifying the swipe gesture generated when the finger touches the touch sensor; and after reporting the swipe gesture event and before identifying that the finger stops touching the touch sensor, the touch sensing module reports the maintenance gesture event if identifying that the finger stays at a same contact point on the touch sensor for the preset time duration.

Optionally, the method may further include that: the processor executes a response operation of responding to the swipe gesture event after receiving the swipe gesture event.

According to a second aspect of the embodiment of the present disclosure, there is provided a gesture operation response device, which may be for use in smart equipment including a touch sensing module and a processor, the touch sensing module including a touch sensor, the device including: a first reporting module configured to control the touch sensing module to report a maintenance gesture event to the processor when it is identified by virtue of the touch sensing module that a time duration for which a finger stays at a contact point after swiping on the touch sensor reaches a preset time duration; and a response module configured to, after the processor receives the maintenance gesture event and before the touch sensing module identifies that the finger leaves the contact point, control the processor to execute, at preset time intervals, a last response operation of responding to a swipe gesture event reported by the touch sensing module, herein the swipe gesture event is an event generated from a swipe gesture of the finger before the finger stays at the contact point.

The advantages and technical effects of the device according to the invention correspond to those of the method presented above.

Optionally the device may further include: a first determination module configured to measure a time duration for which a contact point is continuously touched when the touch sensing module identifies that the finger touches the contact point on the touch sensor, and determine that the time duration for which the finger stays at the contact point reaches the preset time duration when the measured time duration reaches the preset time duration.

Optionally the device may further include: a second reporting module configured to control the touch sensing module to report a raising gesture event to the processor when the touch sensing module monitors that the finger leaves the contact point and does not touch the touch sensor any more; and a stopping control module configured to, after the processor receives the raising gesture event, control the processor to stop executing the step of executing at preset time intervals the last response operation of responding to the swipe gesture event reported by the touch sensing module.

Optionally the device may further include: a monitoring module configured to monitor, by virtue of the touch sensing module, a fingerprint generated when the contact point is touched by the finger; and a second determination module configured to determine that the finger leaves the contact point and does not touch the touch sensor any more when the monitoring module monitors by virtue of the touch sensing module that the fingerprint generated when the contact point is touched disappears.

Optionally the first reporting module may include: a first reporting unit configured to report the swipe gesture event corresponding to the swipe gesture to the processor when the touch sensing module identifies the swipe gesture generated when the finger touches the touch sensor; and a second reporting unit configured to, after the touch sensing module reports the swipe gesture event and before it is identified that the finger stops touching the touch sensor, report the maintenance gesture event to the processor if it is identified that the finger stays at a same contact point on the touch sensor for the preset time duration.

Optionally the response module may further be configured to execute a response operation of responding to the swipe gesture event after the processor receives the swipe gesture event.

According to a third aspect of the embodiment of the present disclosure, there is provided a gesture operation response device, which may be for use in smart equipment including a touch sensing module, a processor and a memory configured to store instructions executable by the touch sensing module and the processor, the touch sensing module including a touch sensor, wherein the touch sensing module may be configured to report a maintenance gesture event to the processor when identifying that a time duration for which a finger stays at a contact point after swiping on the touch sensor reaches a preset time duration; and the processor may be configured to, after the maintenance gesture event is received and before the touch sensing module identifies that the finger leaves the contact point, execute, at preset time intervals, a last response operation of responding to a swipe gesture event reported by the touch sensing module, herein the swipe gesture event is an event generated from a swipe gesture of the finger before the finger stays at the contact point.

In one particular embodiment, the steps of the gesture operation response method are determined by computer program instructions.

Consequently, according to a fourth aspect, the disclosure is also directed to a computer program for executing the steps of a gesture operation response method as described above when this program is executed by a computer.

This program can use any programming language and take the form of source code, object code or a code intermediate between source code and object code, such as a partially compiled form, or any other desirable form.

The disclosure is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that the above general descriptions and detailed descriptions below are only exemplary and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the specification, serve to explain the principles of the present disclosure.
Fig. 1 is a structure diagram of smart equipment, according to part of exemplary embodiments.
Fig. 2 is a flow chart showing a gesture operation response method, according to an exemplary embodiment.
Fig. 3A is a flow chart showing a gesture operation response method, according to another exemplary embodiment.
Fig. 3B is a flow chart showing reporting of a swipe gesture event corresponding to a swipe gesture to a processor, according to an exemplary embodiment.
Fig. 3C is a diagram of feature points in a fingerprint, according to an exemplary embodiment.
Fig. 3D is a diagram of movement of a fingerprint, according to an exemplary embodiment.
Fig. 3E is a diagram of reporting and responding in each stage of swipe operation response, according to an exemplary embodiment.
Fig. 4 is a block diagram of a gesture operation response device, according to an exemplary embodiment.
Fig. 5 is a block diagram of a gesture operation response device, according to another exemplary embodiment.
Fig. 6 is a block diagram of a gesture operation response device, according to another exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with some aspects related to the present disclosure as recited in the appended claims.

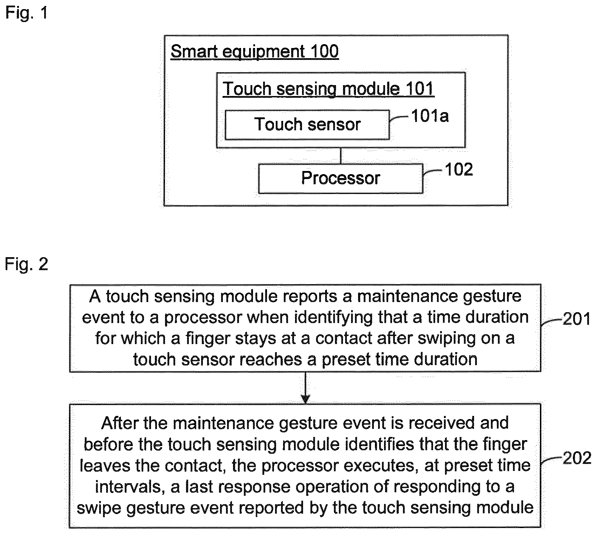

Fig. 1 is a structure diagram of smart equipment, according to part of exemplary embodiments, and as shown in Fig. 1, the smart equipment 100 may include a touch sensing module 101 and a processor 102.

The touch sensing module 101 is connected with the processor 102, the touch sensing module 101 may include a touch sensor 101a, and a user may touch the touch sensor 101a.

Optionally, the touch sensor 101a may be configured to sense or acquire an identification fingerprint on a touch sensing area of the touch sensor 101a.

For example, the touch sensor 101a may be a touch screen with a touch sensing function, or a combination of a touch screen and a touch sensor arranged under the touch screen, or a fingerprint acquirer arranged on the back of a mobile phone.

When a finger of the user touches the touch the sensor 101a, the touch sensor 101a may determine whether the touch sensor 101a is touched by the finger.

Optionally, the touch sensing module 101 may further include an analysis chip or analysis module, and when the finger of the user touches the touch sensor 101a, under a possible condition, the touch sensor 101a may acquire a fingerprint of the finger and a position where the fingerprint is generated and send the acquired fingerprint of the finger and the acquired position of the fingerprint to the analysis chip for the analysis chip to determine whether the touch sensor 101a is touched by the finger and a movement trajectory and the like generated by touching according to the fingerprint of the finger and the position of the fingerprint, which are acquired by the touch sensor 101a; and under another possible condition, the touch sensor 101a may sense changes of signals at some positions and send the signals of which the changes are sensed and the positions where the signals are generated to the analysis chip for the analysis chip to determine whether the touch sensor 101a is touched by the finger and the movement trajectory and the like generated by touching according to the signals of which the changes are sensed by the touch sensor 101a and the positions where the signals are generated.

The processor 102 may be a central processing unit of the smart equipment 100, and may also be a processing unit configured to execute a response operation of responding to a touch gesture event. The processor 102 may control an application on which corresponding operation may be executed by a touch gesture in the smart equipment.

It is important to supplement that the abovementioned "connection" may be wired connection and/or wireless connection and provides a path for information transmission between two connected units, modules or chips.

Fig. 2 is a flow chart showing a gesture operation response method, according to an exemplary embodiment, and as shown in Fig. 2, the gesture operation response method is applied to smart equipment 100 shown in Fig. 1, and includes the following steps.

Step 201: a touch sensing module reports a maintenance gesture event to a processor when identifying that a time duration for which a finger stays at a contact point after swiping on a touch sensor reaches a preset time duration.

Here, the time duration refers to a time duration for which the contact point is touched by the finger.

Step 202: after the maintenance gesture event is received and before the touch sensing module identifies that the finger leaves the contact point, the processor executes, at preset time intervals, a last response operation of responding to a swipe gesture event reported by the touch sensing module.

The swipe gesture event is an event generated from a swipe gesture of the finger before the finger stays at the contact point.

From the above, according to the gesture operation response method provided by the embodiment of the present disclosure, the touch sensing module is controlled to report the maintenance gesture event to the processor after it is determined by virtue of the touch sensing module that the finger swipes and stays at the contact point for the preset time duration, the processor is controlled to repeatedly execute the response operation after the maintenance gesture event is received and before the finger leaves the touch sensor, and since the processor may continuously and repeatedly execute the response operation after the finger stays at the contact point, finger control is simplified, the problem of tedious operation caused by a requirement on repeated swiping of the finger on the touch sensor when contents are required to be continuously scrolled in the related technology is solved, and the effect of simplifying swipe operation of the finger is achieved.

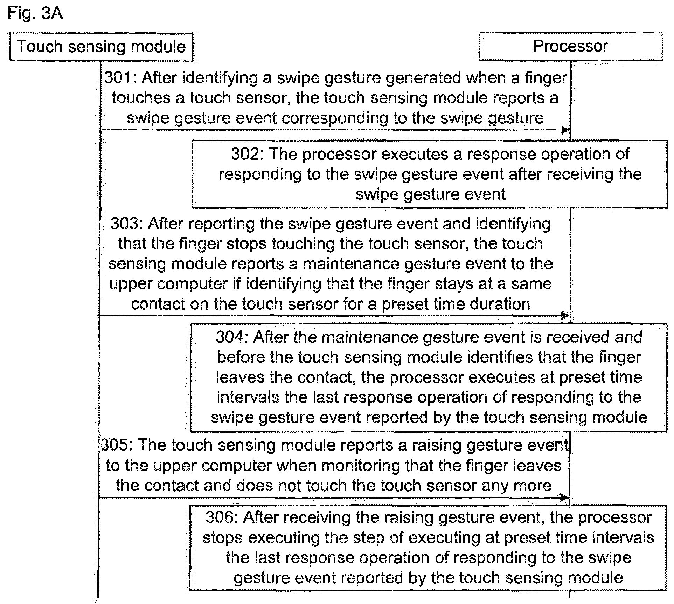

Fig. 3A is a flow chart showing a gesture operation response method, according to another exemplary embodiment, and as shown in Fig. 3A, the gesture operation response method is applied to smart equipment 100 shown in Fig. 1, and includes the following steps.

Step 301: after identifying a swipe gesture generated when a finger touches a touch sensor, a touch sensing module reports a swipe gesture event corresponding to the swipe gesture to a processor.

During a practical application, the touch sensing module may identify whether the finger touches the touch sensor, and may also identify the swipe gesture generated when the finger touches the touch sensor.

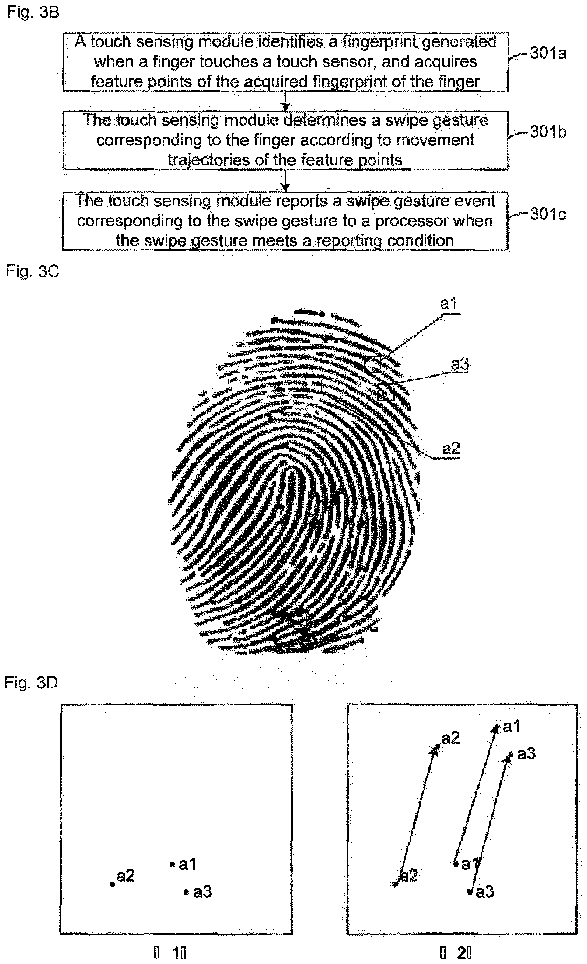

Optionally, the touch sensor may acquire a fingerprint generated when the finger touches the touch sensor, and at this moment, the touch sensing module may determine the swipe gesture of the finger according to the identified fingerprint. In a possible implementation mode, the operation that the touch sensing module reports the swipe gesture event corresponding to the swipe gesture to the processor after identifying the swipe gesture of the finger may refer to steps shown in Fig. 3B.

Step 301a: the touch sensing module identifies the fingerprint generated when the finger touches the touch sensor, and acquires feature points of the identified fingerprint of the finger.

Under a normal condition, when the finger touches the touch sensor, the fingerprint of the finger may be left on a contact surface of the finger and the touch sensor, and at this moment, the touch sensing module may identify the fingerprint generated when the finger touches the touch sensor.

Fingerprints of fingers of everyone have their own distinct features, and for identifying the fingerprint of a finger to determine a swipe behavior generated when the finger continuously touches the touch sensor, feature points of the fingerprint of the finger may be identified. Fig. 3C is a diagram of a fingerprint, according to an exemplary embodiment, wherein feature point a1, feature point a2 and feature point a3 are all feature points of the fingerprint, wherein feature point a1 and feature point a2 are endpoints in the fingerprint, and feature point a3 is an intersection in the fingerprint.

Obviously, relative positions of these feature points may also be taken as features configured to uniquely identify the fingerprint during a practical application. For example, relative positions of every, or any, two of feature point a1, feature point a2 and feature point a3 in Fig. 3C are taken as features configured to uniquely identify the fingerprint.

For example, Fig. 3D is a diagram of movement of a fingerprint, according to an exemplary embodiment, and in (1) of Fig. 3D, feature points of the fingerprint are identified to obtain feature point a1, feature point a2 and feature point a3, the feature points of the fingerprint corresponding to the finger may also move when the finger moves, the moved feature points of the fingerprint referring to (2) of Fig. 3D, and obviously, movement of the fingerprint of the finger may be reflected by movement of the feature points of the fingerprint, and may further reflect synchronous movement of the feature points of the fingerprint.

Step 301b: the touch sensing module determines the swipe gesture corresponding to the finger according to movement trajectories of the feature points.

The touch sensing module may determine the swipe gesture corresponding to the finger according to the movement trajectories of the feature points on the fingerprint, and for example, when the movement trajectories of the feature points move rightwards, the swipe gesture is a rightward swipe.

Optionally, the touch sensing module may also determine the swipe gesture corresponding to the finger by combining movement velocities and movement trajectories of the feature points, and for example, when the movement trajectories of the feature points move rightwards and the movement velocities are higher, the swipe gesture is a rightward rapid swipe.

During practical implementation, the touch sensing module may determine a satisfied swipe gesture according to movement characteristics of feature points, and the movement characteristics of the feature points mentioned here include at least one of movement direction, movement distance and movement velocity. When each movement characteristic of the feature points satisfies respective movement characteristics of a certain swipe gesture, it is determined that a finger corresponding to the feature points performs touch swipe corresponding to the swipe gesture.

Step 301c: the touch sensing module reports a swipe gesture event corresponding to the swipe gesture to the processor when the swipe gesture meets a reporting condition.

The reporting condition mentioned herein usually refers to the swipe gesture belonging to a preset swipe gesture capable of triggering response operation. The preset swipe gesture may, for example, limit swipe characteristics, for example, a distance of the swipe gesture is limited to reach a preset distance (or at least a preset distance), or a velocity of the swipe gesture is limited to be higher than a preset velocity, or a movement direction of the swipe gesture is limited to be consistent with a preset direction.

Step 302: the processor executes a response operation of responding to the swipe gesture event after receiving the swipe gesture event.

After the processor receives the swipe gesture event, it is indicated that the finger performs the swipe gesture meeting the reporting condition, and since the swipe gesture meeting the reporting condition belongs to a preset swipe gesture capable of triggering the response operation, the processor may execute the response operation of responding to the swipe gesture event.

The response operation mentioned here is determined by an application operated by current swipe, and for example, when a contact list is scrolled by a preset number of rows, the response operation may be scrolling the contact list by a preset number of rows; and for another example, when pages of an electronic book are turned, the response operation may be turning the pages of the electronic book.

During practical implementation, the processor determines the currently operated application and a displayed page, and controls the application to execute response operation corresponding to the displayed page and the swipe gesture. Alternatively, the processor determines the currently operated application and sends the swipe gesture event to the application, and the application may execute the corresponding response operation according to the currently displayed page and the swipe gesture corresponding to the swipe gesture event after receiving the swipe gesture event.

Step 303: after reporting the swipe gesture event and identifying that the finger stops moving while touching the touch sensor, the touch sensing module reports a maintenance gesture event to the processor if identifying that the finger remains stopped at a same contact point on the touch sensor for a preset time duration. For the avoidance of doubt, in any embodiment a contact point may be equivalent to an area of contact, and may depend upon the area presented by the pointer to the touch sensor. For example, the finger or touch implement may remain at a contact point having an area of size substantially equal to the area of the pointer in contact with the touch screen.

The touch sensing module reports the maintenance gesture event to the processor when identifying that a time duration for which the finger stays at the contact point after swiping on the touch sensor reaches the preset time duration.

Optionally, the touch sensing module measures a time duration for which a contact is continuously touched when identifying that the finger touches the contact point on the touch sensor, and determines that the time duration for which the finger stays at the contact reaches the preset time duration when the measured time duration reaches the preset time duration.

That is, when the finger stops at a certain contact point after swiping on the touch sensor and a time duration for which the finger stays at the contact point reaches the preset time duration, the touch sensing module may report the maintenance gesture event to the processor.

Optionally, the touch sensing module may time touch over the contact point when identifying that the finger touches the contact point on the touch sensor, and determines that the time duration for which the finger stays at the contact point reaches the preset time duration and may report the maintenance gesture event to the processor when a timed time duration reaches the preset time duration.

Step 304: after the maintenance gesture event is received and before the touch sensing module identifies that the finger leaves the contact point, the processor executes at preset time intervals the last response operation of responding to the swipe gesture event reported by the touch sensing module.

The touch sensing module may identify a touch action of the finger, so that the touch sensing module may monitor that the finger leaves the contact point or the touch sensor. The touch sensing module may send a report to the processor when monitoring that the finger leaves the contact point or touch sensor.

After the maintenance gesture event is received and before the touch sensing module identifies that the finger leaves the contact point or touch sensor, the processor may repeatedly execute the response operation, and namely execute, at preset time intervals, the last response operation of responding to the swipe gesture event reported by the touch sensing module. In other words, the processor may repeatedly execute the last executed swipe gesture while the finger remains at the contact point.

Here, the preset time interval may be 0.5s, 1s and the like, and an interval time duration corresponding to the preset time interval may be limited by the processor, may also be limited by a user, and may further correspond to an application. For example, different applications or different implementations in an application may use different preset time intervals, and under such a condition, after determining an application to be responded, the processor may query a preset time interval corresponding to the application and/or query a preset time interval corresponding to a currently displayed page of the application and then execute, at preset time intervals, a last response operation of responding to a swipe gesture event reported by the touch sensing module. There are no limits made to preset time interval limiting manners in the embodiment.

Here, the last responding to the swipe gesture event reported by the touch sensing module may be responding to the swipe gesture event reported by the touch sensing module by the processor during a current swipe gesture touch process.

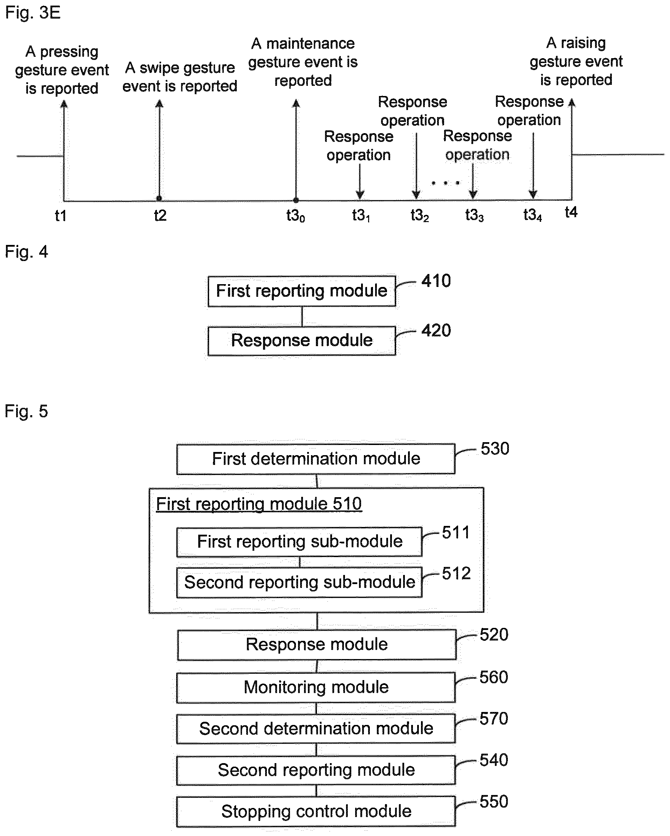

For example, Fig. 3E is a diagram of reporting and responding in each stage of swipe operation response, according to an exemplary embodiment. In Fig. 3E, the finger of the user starts touching the touch sensor at a first moment t1, and at this moment, the touch sensing module may detect that the finger presses the touch sensor, and reports a pressing gesture event to the processor; then, the finger continues touching the touch sensor and swipes on the touch sensor, and at a second moment t2, the touch sensing module determines that a swipe gesture generated by swiping of the finger meets a reporting condition, and reports a swipe gesture event to the processor; next, the finger continues touching the touch sensor, swipes on the touch sensor and stays at a certain contact point, and at a third moment t3₀, the touch sensing module reports a maintenance gesture event to the processor when determining that a time duration for which the finger stays at the contact point reaches a preset time duration; and after the finger stays at the contact point for a certain period time, at a fourth moment t4, the touch sensing module detects that the finger leaves the touch sensor, and sends a raising gesture event. Between the third moment t3₀ and the fourth moment t4, the processor repeatedly executes response operation at preset time intervals, wherein each of an interval between the moment t3₀ and a moment t3₁, an interval between the moment t3₁ and a moment t3₂, an interval between the moment t3₂ and a moment t3₃ and an interval between the moment t3₃ and a moment t3₄ is the preset time interval, that is, the processor may execute the response operation at the moment t3₁, the moment t3₂, the moment t3₃ and the moment t3₄ respectively.

It is important to supplement that the processor may execute the response operation after waiting for the interval time duration corresponding to the preset time interval when receiving the maintenance gesture event and may also execute the response operation immediately once receiving the maintenance gesture event. The processor waits for one preset time duration after finishing executing the response operation for the first time after receiving the maintenance gesture event, and then the processor executes the response operation again if the finger does not leave the contact point, and always executes the response operation in the same manner until the finger leaves the contact point.

Step 305: the touch sensing module reports a raising gesture event when the touch sensing module monitors that the finger leaves the contact point and does not touch the touch sensor any more.

Optionally, the touch sensing module monitors the fingerprint generated when the contact point is touched by the finger, and the touch sensing module determines that the finger leaves the contact point and does not touch the touch sensor any more when monitoring that the fingerprint generated when the contact point is touched disappears.

Step 306: after receiving the raising gesture event, the processor stops executing the step of executing at preset time intervals the last response operation of responding to the swipe gesture event reported by the touch sensing module.

After receiving the raising gesture event, the processor stops executing the step of executing at preset time intervals the last response operation of responding to the swipe gesture event reported by the touch sensing module.

Step 305 and Step 306 may be replaced as follows: the touch sensing module reports a leaving gesture event to the processor when the touch sensing module monitors that the finger leaves the contact point, and after receiving the leaving gesture event, the processor stops executing the step of executing at preset time intervals the last response operation of responding to the swipe gesture event reported by the touch sensing module. Here, the condition that the finger leaves the contact may refer to the finger leaving the touch sensor, or may also, or alternatively, refer to the finger leaving the contact point and continues swiping on the touch sensor.

From each of the abovementioned steps, it can be seen that the touch sensing module reports the swipe gesture event to the processor when the swipe gesture generated when the finger swipes on the touch sensor meets the reporting condition, and the processor may execute the response operation for the swipe gesture event; and then the finger continues swiping on the touch sensor until a time duration for which the finger stays at a certain contact point reaches the preset time duration, and at this moment, the touch sensing module may report the maintenance gesture event to the processor, and the processor executes at preset time intervals the response operation after acquiring the maintenance gesture event until the finger leaves the contact point.

From the above, according to the gesture operation response method provided by the embodiment of the present disclosure, the touch sensing module is controlled to report the maintenance gesture event to the processor after it is determined by virtue of the touch sensing module that the finger swipes and stays at the contact point for the preset time duration, the processor is controlled to repeatedly execute the response operation after the maintenance gesture event is received and before the finger leaves the touch sensor, and since the processor may continuously and repeatedly execute the response operation after the finger stays at the contact point, finger control is simplified, the problem of tedious operation caused by a requirement on repeated swiping of the finger on the touch sensor when contents are required to be continuously scrolled in the related technology is solved, and the effect of simplifying swipe operation of the finger is achieved.

In addition, the touch sensing module is only required to report the maintenance gesture event once, and then the processor may repeatedly execute the response operation many times, so that information transmission between the touch sensing module and the processor is greatly simplified.

The touch sensing module monitors contacts on the touch sensor, and may determine that a time duration for which the finger stays at a certain contact point reaches the preset time duration when monitoring that the contact point is continuously touched for the preset time duration, so that a basis is provided for determining the time duration for which the finger stays at the contact point.

The touch sensing module sends the raising gesture event to the processor when monitoring that the finger leaves the contact point where it stays and does not trigger the touch sensor any more, and the processor stops repeatedly executing the response operation, so that the repeated response operation is automatically stopped when the finger leaves the touch sensor.

The touch sensing module monitors the fingerprint generated when the contact is touched to determine time when the finger leaves the contact, and the time when the finger leaves the contact may be determined when the fingerprint is not detected because the fingerprint is inevitably left at the contact when the finger touches the contact, so that correct determination about the time when the finger leaves the contact point is ensured.

A device embodiment of the present disclosure is described below, and may be configured to execute the method embodiment of the present disclosure. Details undisclosed in the device embodiment of the present disclosure refer to the method embodiment of the present disclosure.

Fig. 4 is a block diagram of a gesture operation response device, according to an exemplary embodiment. As shown in Fig. 4, the gesture operation response device is applied to smart equipment 100 shown in Fig. 1, and the gesture operation response device includes, but not limited to: a first reporting module 410 and a response module 420.

The first reporting module 410 may be configured to control a touch sensing module to report a maintenance gesture event to a processor when it is identified by virtue of the touch sensing module that a time duration for which a finger stays at a contact after swiping on a touch sensor reaches a preset time duration; and
the response module 420 may be configured to control the processor to execute, at preset time intervals, a last response operation of responding to a swipe gesture event reported by the touch sensing module after the processor receives the maintenance gesture event and before the touch sensing module identifies that the finger leaves the contact, herein the swipe gesture event is an event generated from a swipe gesture of the finger before the finger stays at the contact point.

From the above, according to the gesture operation response device provided by the embodiment of the present disclosure, the touch sensing module is controlled to report the maintenance gesture event to the processor after it is determined by virtue of the touch sensing module that the finger swipes and stays at the contact for the preset time duration, the processor is controlled to repeatedly execute the response operation after the maintenance gesture event is received and before the finger leaves the touch sensor, and since the processor may continuously and repeatedly execute the response operation after the finger stays at the contact point, finger control is simplified, the problem of tedious operation caused by a requirement on repeated swiping of the finger on the touch sensor when contents are required to be continuously scrolled in the related technology is solved, and the effect of simplifying swipe operation of the finger is achieved.

Fig. 5 is a block diagram of a gesture operation response device, according to another exemplary embodiment. As shown in Fig. 5, the gesture operation response device is applied to smart equipment 100 shown in Fig. 1, and the gesture operation response device includes, but not limited to: a first reporting module 510 and a response module 520.

The first reporting module 510 may be configured to control a touch sensing module to report a maintenance gesture event to a processor when it is identified by virtue of the touch sensing module that a time duration for which a finger stays at a contact after swiping on a touch sensor reaches a preset time duration.

The response module 520 may be configured to control the processor to execute, at preset time intervals, a last response operation of responding to a swipe gesture event reported by the touch sensing module after the processor receives the maintenance gesture event and before the touch sensing module identifies that the finger leaves the contact, herein the swipe gesture event is an event generated from a swipe gesture of the finger before the finger stays at the contact.

In a possible implementation mode, the gesture operation response device may further include a first determination module 530.

The first determination module 530 may be configured to measure a time duration for which a contact is continuously touched when the touch sensing module identifies that the finger touches the contact on the touch sensor, and determine that the time duration for which the finger stays at the contact reaches the preset time duration when the measured time duration reaches the preset time duration.

In a possible implementation mode, the gesture operation response device may further include: a second reporting module 540 and a stopping control module 550.

The second reporting module 540 may be configured to control the touch sensing module to report a raising gesture event to the processor when the touch sensing module monitors that the finger leaves the contact and does not touch the touch sensor any more.

The stopping control module 550 may be configured to control the processor to stop executing the step of executing at preset time intervals the last response operation of responding to the swipe gesture event reported by the touch sensing module after the processor receives the raising gesture event.

After receiving the raising gesture event, the processor stops executing the step of executing at preset time intervals the last response operation of responding to the swipe gesture event reported by the touch sensing module.

In another possible implementation mode, the gesture operation response device may further include: a monitoring module 560 and a second determination module 570.

The monitoring module 560 may be configured to monitor, by virtue of the touch sensing module, a fingerprint generated when the contact is touched by the finger.

The second determination module 570 may be configured to determine that the finger leaves the contact and does not touch the touch sensor any more when the monitoring module 560 monitors by virtue of the touch sensing module that the fingerprint generated when the contact is touched disappears.

In another possible implementation mode, the first reporting module 510 includes: a first reporting sub-module 511 and a second reporting sub-module 512.

The first reporting sub-module 511 may be configured to report the swipe gesture event corresponding to the swipe gesture to the processor after the touch sensing module identifies the swipe gesture generated when the finger touches the touch sensor.

During a practical application, the touch sensing module may identify whether the finger touches the touch sensor, and may also identify the swipe gesture generated when the finger touches the touch sensor.

Optionally, the touch sensor may acquire the fingerprint generated when the finger touches the touch sensor, and at this moment, the touch sensing module may determine the swipe gesture of the finger according to the identified fingerprint. In a possible implementation mode, the first reporting sub-module 511 may further be configured to control the touch sensing module to identify the fingerprint generated when the finger touches the touch sensor and acquire feature points of the identified fingerprint of the finger when the touch sensing module reports the swipe gesture event corresponding to the swipe gesture to the processor after identifying the swipe gesture of the finger.

Under a normal condition, when the finger touches the touch sensor, the fingerprint of the finger may be left on a contact surface of the finger and the touch sensor, and at this moment, the touch sensing module may identify the fingerprint generated when the finger touches the touch sensor.

Fingerprints of fingers of everyone have own features, and for identifying the fingerprint of the same finger to determine a swipe behavior generated when the finger continuously touches the touch sensor, feature points of the fingerprint of the finger may be identified. Obviously, relative positions of these feature points may also be taken as features configured to uniquely identify the fingerprint during a practical application.

The first reporting sub-module 511 may further be configured to control the touch sensing module to determine the swipe gesture corresponding to the finger according to movement trajectories of the feature points.

The touch sensing module may determine the swipe gesture corresponding to the finger according to the movement trajectories of the feature points on the fingerprint, and for example, when the movement trajectories of the feature points move rightwards, the swipe gesture is rightward swipe.

Optionally, the touch sensing module may also determine the swipe gesture corresponding to the finger by combining movement velocities and movement trajectories of the feature points, and for example, when the movement trajectories of the feature points move rightwards and the movement velocities are higher, the swipe gesture is rightward rapid swipe.

During practical implementation, the touch sensing module may determine a satisfied swipe gesture according to movement characteristics of feature points, and the movement characteristics of the feature points mentioned here include at least one of movement direction, movement distance and movement velocity. When each movement characteristic of the feature points satisfies respective movement characteristics of a certain swipe gesture, it is determined that a finger corresponding to the feature points performs touch swipe corresponding to the swipe gesture.

The first reporting sub-module 511 may further be configured to control the touch sensing module to report the swipe gesture event corresponding to the swipe gesture to the processor when the swipe gesture meets a reporting condition.

The reporting condition mentioned here usually refers to that the swipe gesture belongs to a preset swipe gesture capable of triggering response operation, the preset swipe gesture may, for example, limit swipe characteristics, and for example, a distance of the swipe gesture is limited to reach a preset distance, or a velocity of the swipe gesture is limited to be higher than a preset velocity, or a movement direction of the swipe gesture is limited to be consistent with a preset direction.

The second reporting sub-module 512 may be configured to, after the touch sensing module reports the swipe gesture event and identifies that the finger stops touching the touch sensor, report the maintenance gesture event to the processor if identifying that the finger stays at the same contact on the touch sensor for the preset time duration.

The touch sensing module reports the maintenance gesture event to the processor when identifying that the time duration for which the finger stays at the contact after swiping on the touch sensor reaches the preset time duration.

Optionally, the touch sensing module measures a time duration for which a contact is continuously touched when identifying that the finger touches the contact on the touch sensor, and determines that the time duration for which the finger stays at the contact reaches the preset time duration when the measured time duration reaches the preset time duration.

That is, when the finger stops at a certain contact after swiping on the touch sensor and a time duration for which the finger stays at the contact reaches the preset time duration, the touch sensing module may report the maintenance gesture event to the processor.

Optionally, the touch sensing module may time touch over the contact when identifying that the finger touches the contact on the touch sensor, and determines that the time duration for which the finger stays at the contact reaches the preset time duration and may report the maintenance gesture event to the processor when a timed time duration reaches the preset time duration.

In another possible implementation mode, the response module 520 may further be configured to execute the last response operation of responding to the swipe gesture event after the processor receives the maintenance gesture event.

After the processor receives the swipe gesture event, it is indicated that the finger performs the swipe gesture meeting the reporting condition, and since the swipe gesture meeting the reporting condition belongs to a preset swipe gesture capable of triggering the response operation, the processor may execute the response operation of responding to the swipe gesture event.

The response operation mentioned here is determined by an application operated by current swipe, and for example, when a contact list is scrolled by a preset number of rows, the response operation may be scrolling the contact list by a preset number of rows; and for another example, when pages of an electronic book are turned, the response operation may be turning the pages of the electronic book.

During practical implementation, the processor determines the currently operated application and a displayed page, and controls the application to execute response operation corresponding to the displayed page and the swipe gesture. Or, the processor determines the currently operated application and sends the swipe gesture event to the application, and the application may execute the corresponding response operation according to the currently displayed page and the swipe gesture corresponding to the swipe gesture event after receiving the swipe gesture event.

From the above, according to the gesture operation response device provided by the embodiment of the present disclosure, the touch sensing module is controlled to report the maintenance gesture event to the processor after it is determined by virtue of the touch sensing module that the finger swipes and stays at the contact for the preset time duration, the processor is controlled to repeatedly execute the response operation after the maintenance gesture event is received and before the finger leaves the touch sensor, and since the processor may continuously and repeatedly execute the response operation after the finger stays at the contact, finger control is simplified, the problem of tedious operation caused by a requirement on repeated swiping of the finger on the touch sensor when contents are required to be continuously scrolled in the related technology is solved, and the effect of simplifying swipe operation of the finger is achieved.

In addition, the touch sensing module is only required to report the maintenance gesture event once, and then the processor may repeatedly execute the response operation for many times, so that information transmission between the touch sensing module and the processor is greatly simplified.

The touch sensing module monitors contacts on the touch sensor, and may determine that a time duration for which the finger stays at a certain contact reaches the preset time duration when monitoring that the contact is continuously touched for the preset time duration, so that a basis is provided for determining the time duration for which the finger stays at the contact.

The touch sensing module sends the raising gesture event to the processor when monitoring that the finger leaves the contact where it stays and does not trigger the touch sensor any more, and the processor stops repeatedly executing the response operation, so that the repeated response operation is automatically stopped when the finger leaves the touch sensor.

The touch sensing module monitors the fingerprint generated when the contact is touched to determine time when the finger leaves the contact, and the time when the finger leaves the contact may be determined when the fingerprint is not detected because the fingerprint is inevitably left at the contact when the finger touches the contact, so that correct determinment about the time when the finger leaves the contact is ensured.

With respect to the devices in the above embodiments, the specific manners for performing operations for individual modules therein have been described in detail in the embodiments regarding the methods, which will not be elaborated herein.

An exemplary embodiment of the present disclosure provides a gesture operation response device, which may implement the gesture operation response method provided by the present disclosure, the gesture operation response device is applied to smart equipment, the smart equipment includes: a touch sensing module, a processor and a memory configured to store instructions executable for the touch sensing module and the processor, and the touch sensing module includes a touch sensor,

wherein the touch sensing module is configured to report a maintenance gesture event to the processor when identifying that a time duration for which a finger stays at a contact after swiping on the touch sensor reaches a preset time duration; and

the processor is configured to, after the maintenance gesture event is received and before the touch sensing module identifies that the finger leaves the contact, execute, at preset time intervals, a last response operation of responding to a swipe gesture event reported by the touch sensing module, herein the swipe gesture event is an event generated from a swipe gesture of the finger before the finger stays at the contact.

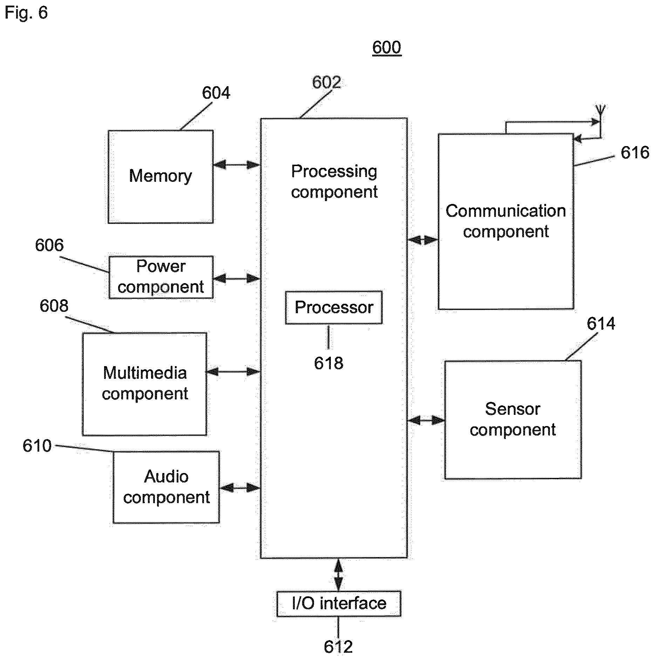

Fig. 6 is a block diagram of a gesture operation response device, according to another exemplary embodiment. For example, the device 600 may be smart equipment with a touch sensing module and a processor, such as a mobile phone, a computer, a digital broadcast terminal, a messaging device, a gaming console, a tablet, a medical device, exercise equipment and a Personal Digital Assistant (PDA).

Referring to Fig. 6, the device 600 may include one or more of the following components: a processing component 602, a memory 604, a power component 606, a multimedia component 608, an audio component 610, an Input/Output (I/O) interface 612, a sensor component 614, and a communication component 616. Here, the processing component 602 may be called the processor, or a part unrelated to the touch sensing module in the processing module 602 is called the processor.

The processing component 602 typically controls overall operations of the device 600, such as the operations associated with display, telephone calls, data communications, camera operations, and recording operations. The processing component 602 may include one or more processors 618 to execute instructions to perform all or part of the steps of the abovementioned method. Moreover, the processing component 602 may include one or more modules which facilitate interaction between the processing component 602 and the other components. For instance, the processing component 602 may include a multimedia module to facilitate interaction between the multimedia component 608 and the processing component 602.

The memory 604 is configured to store various types of data to support the operation of the device 600. Examples of such data include instructions for any applications or methods operated on the device 600, contact data, contact list data, messages, pictures, video, etc. The memory 604 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 606 provides power for various components of the device 600. The power component 606 may include a power management system, one or more power supplies, and other components associated with the generation, management and distribution of power for the device 600.

The multimedia component 608 includes a sensor screen providing an output interface between the device 600 and a user. In some embodiments, the sensor screen may include a Liquid Crystal Display (LCD) and a Touch Panel (TP). If the sensor screen includes the TP, the sensor screen may be implemented as a touch sensor to receive an input signal from the user. The TP includes one or more touch sensors to sense touches, swipes and gestures on the TP. The touch sensors may not only sense a boundary of a touch or swipe action, but also sense a duration and pressure associated with the touch or swipe action. In some embodiments, the multimedia component 608 includes a front camera and/or a rear camera. The front camera and/or the rear camera may receive external multimedia data when the device 600 is in an operation mode, such as a photographing mode or a video mode. Each of the front camera and the rear camera may be a fixed optical lens system or have focusing and optical zooming capabilities.

The audio component 610 is configured to output and/or input an audio signal. For example, the audio component 610 includes a Microphone (MIC), and the MIC is configured to receive an external audio signal when the device 600 is in the operation mode, such as a call mode, a recording mode and a voice recognition mode. The received audio signal may be further stored in the memory 604 or sent through the communication component 616. In some embodiments, the audio component 610 further includes a speaker configured to output the audio signal.

The I/O interface 612 provides an interface between the processing component 602 and a peripheral interface module, and the peripheral interface module may be a keyboard, a click wheel, a button and the like. The button may include, but not limited to: a home button, a volume button, a starting button and a locking button.

The sensor component 614 includes one or more sensors configured to provide status assessment in various aspects for the device 600. For instance, the sensor component 614 may detect an on/off status of the device 600 and relative positioning of components, such as a display and small keyboard of the device 600, and the sensor component 614 may further detect a change in a position of the device 600 or a component of the device 600, presence or absence of contact between the user and the device 600, orientation or acceleration/deceleration of the device 600 and a change in temperature of the device 600. The sensor component 614 may include a proximity sensor configured to detect presence of an object nearby without any physical contact. The sensor component 614 may also include a light sensor, such as a Complementary Metal Oxide Semiconductor (CMOS) or Charge Coupled Device (CCD) image sensor configured for use in an imaging application. In some embodiments, the sensor component 614 may also include an acceleration sensor, a gyroscope sensor, a magnetic sensor, a pressure sensor or a temperature sensor. The sensor component 614 may further include the touch sensing module, or may include a part of the touch sensing module, and the other part of the touch sensing module is positioned in the processing component 602.

The communication component 616 is configured to facilitate wired or wireless communication between the device 600 and another device. The device 600 may access a communication-standard-based wireless network, such as a Wireless Fidelity (WiFi) network, a 2nd-Generation (2G) or 3rd-Generation (3G) network or a combination thereof. In an exemplary embodiment, the communication component 616 receives a broadcast signal or broadcast associated information from an external broadcast management system through a broadcast channel. In an exemplary embodiment, the communication component 616 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BlueTooth (BT) technology and another technology.

In an exemplary embodiment, the device 600 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned gesture operation response method.

In an exemplary embodiment, there is also provided a non-transitory computer-readable storage medium including an instruction, such as the memory 604 including an instruction, and the instruction may be executed by the processor 618 of the device 600 to implement the abovementioned gesture operation response method. For example, the non-transitory computer-readable storage medium may be a ROM, a Compact Disc Read-Only Memory (CD-ROM), a magnetic tape, a floppy disc, an optical data storage device and the like.

Although the invention has been described in relation to a finger contacting a touch sensor to perform control operations, it will be appreciated that any suitable pointing means can be used, provided the touch sensor is responsive to it. For example a stylus or other pointing device may be used.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

Other embodiments of the present disclosure will be apparent to those skilled in the art from consideration of the specification and practice of the present disclosure. This disclosure is intended to cover any variations, uses, or adaptations of the present disclosure following the general principles thereof and including such departures from the present disclosure as come within known or customary practice in the art. It is intended that the specification and examples be considered as exemplary only, with a true scope of the present disclosure being indicated by the following claims.

It will be appreciated that the present disclosure is not limited to the exact construction that has been described above and illustrated in the accompanying drawings, and that various modifications and changes may be made. It is intended that the scope of the present disclosure only be limited by the appended claims.

### INDUSTRIAL APPLICABILITY

The present disclosure discloses a gesture operation response method and device, and belongs to the field of touch control. The gesture operation response method includes that: a touch sensing module is utilized to report a maintenance gesture event to a processor when identifying that a time duration for which a finger stays at a contact point after swiping on a touch sensor reaches a preset time duration; and the processor is utilized to execute, at preset time intervals, a last response operation of responding to a swipe gesture event reported by the touch sensing module after the maintenance gesture event is received and before the touch sensing module identifies that the finger leaves the contact point. According to the present disclosure, the problem of tedious operation caused by a requirement on repeated swiping of the finger on the touch sensor when contents are required to be continuously scrolled in the related technology is solved, and the effect of simplifying swipe operation of the finger is achieved.

## Claims

1. A gesture operation response method, applied to smart equipment comprising a touch sensing module and a processor, the touch sensing module comprising a touch sensor, the method comprising:
reporting (201), by the touch sensing module, a maintenance gesture event to the processor when identifying that a time duration for which a pointing means remains at a contact point of the touch sensor, after a swipe gesture on the touch sensor, reaches a preset time duration; and
after the maintenance gesture event is received and before the touch sensing module identifies that the pointing means leaves the contact point, repeatedly executing (202), by the processor, at a preset time interval, a last response operation of responding to a swipe gesture event reported by the touch sensing module, wherein the swipe gesture event is an event generated from the swipe gesture of the pointing means before the pointing means stays at the contact point, and wherein the response operation is determined by an application operated by the swipe gesture,
wherein the preset time interval corresponds to the application operated by the swipe gesture, and different applications or different implementations in an application use different preset time intervals.

2. The method according to claim 1, further comprising:
measuring, by the touch sensing module, a time duration for which the contact point is continuously touched when identifying that the pointing means touches the contact point on the touch sensor, and determining that the time duration for which the pointing means stays at the contact point reaches the preset time duration when the measured time duration reaches the preset time duration.

3. The method according to any preceding claim, further comprising:
reporting (305), by the touch sensing module, a raising gesture event to the processor when the touch sensing module monitors that the pointing means leaves the contact point and does not touch the touch sensor any more; and
upon reception of the raising gesture event, stopping (306) executing, by the processor, the step of executing at preset time intervals the last response operation of responding to the swipe gesture event reported by the touch sensing module.

4. The method according to any preceding claim, wherein the pointing means is a finger, the method further comprising:
monitoring, by the touch sensing module, a fingerprint generated when the contact point is touched by the finger; and
determining, by the touch sensing module, that the finger leaves the contact point and does not touch the touch sensor any more when monitoring that the fingerprint generated when the contact point is touched disappears.

5. The method according to any preceding claim, wherein reporting (201), by the touch sensing module, the maintenance gesture event to the processor when identifying that the time duration for which the pointing means stays at the contact point after the swipe gesture on the touch sensor reaches the preset time duration comprises:
reporting (301), by the touch sensing module, the swipe gesture event corresponding to the swipe gesture to the processor when identifying the swipe gesture generated when the pointing means touches the touch sensor;
after reporting the swipe gesture event and before identifying that the pointing means stops touching the touch sensor, reporting (303), by the touch sensing module, the maintenance gesture event if identifying that the pointing means stays at the same contact point on the touch sensor for the preset time duration.

6. The method according to claim 5, further comprising:
executing (302), by the processor, a response operation of responding to the swipe gesture event after receiving the swipe gesture event.

7. The method according to any preceding claim, wherein the touch sensor is a fingerprint acquirer located on a back of the smart equipment.

8. The method according to any preceding claim, further comprising:
determining the application determining the response operation;
determining the value of the preset time interval by: querying, by the processor, a preset time interval corresponding to the application and/or querying, by the processor, a preset time interval corresponding to a currently displayed page of the application.

9. A smart equipment (100) comprising a gesture operation response device, a touch sensing module (101) and a processor (102), the touch sensing module (101) comprising a touch sensor (101a), wherein the gesture operation response device comprises:
a first reporting module (410, 510) configured to control the touch sensing module (101) to report a maintenance gesture event to the processor (102) when it is identified by virtue of the touch sensing module (101) that a time duration for which a pointing means stays at a contact point after a swipe gesture on the touch sensor (101a) reaches a preset time duration; and
a response module (420, 520) configured to, after the processor (102) receives the maintenance gesture event and before the touch sensing module (101) identifies that the pointing means leaves the contact point, control the processor (102) to repeatedly execute, at a preset time interval, a last response operation of responding to a swipe gesture event reported by the touch sensing module (101), wherein the swipe gesture event is an event generated from the swipe gesture of the pointing means before the pointing means stays at the contact point, and wherein the response operation is determined by an application operated by the swipe gesture,
wherein the preset time interval corresponds to the application operated by the swipe gesture, and different applications or different implementations in an application use different preset time intervals.

10. The smart equipment according to claim 9, wherein the gesture operation response device further comprises:
a first determination module (530) configured to measure a time duration for which the contact point is continuously touched when the touch sensing module (101) identifies that the pointing means touches the contact point on the touch sensor (101a), and determine that the time duration for which the pointing means stays at the contact point reaches the preset time duration when the measured time duration reaches the preset time duration.

11. The smart equipment according to claim 9 or 10, wherein the gesture operation response device further comprises:
a second reporting module (540) configured to control the touch sensing module (101) to report a raising gesture event to the processor (102) when the touch sensing module (101) monitors that the pointing means leaves the contact point and does not touch the touch sensor (101a) any more; and
a stopping control module (550) configured to, after the processor (102) receives the raising gesture event, control the processor (102) to stop executing the step of executing at preset time intervals the last response operation of responding to the swipe gesture event reported by the touch sensing module (101).

12. The smart equipment according to any of claims 9 to 11, wherein the pointing means is a finger, the device further comprising:
a monitoring module (560) configured to monitor, by virtue of the touch sensing module (101), a fingerprint generated when the contact point is touched by the finger; and
a second determination module (570) configured to determine that the finger leaves the contact point and does not touch the touch sensor (101a) any more when the monitoring module (560) monitors by virtue of the touch sensing module (101) that the fingerprint generated when the contact point is touched disappears.

13. The smart equipment according to any one of claims 9 to 12, wherein the first reporting module (510) comprises:
a first reporting sub-module (511) configured to report the swipe gesture event corresponding to the swipe gesture to the processor (102) when the touch sensing module (101) identifies the swipe gesture generated when the pointing means touches the touch sensor (101a); and
a second reporting sub-module (512) configured to, after the touch sensing module (101) reports the swipe gesture event and before it is identified that the pointing means stops touching the touch sensor (101a), report the maintenance gesture event to the processor (102) if it is identified that the pointing means stays at the same contact point on the touch sensor (101a) for the preset time duration.

14. The smart equipment according to claim 12, wherein
the response module (520) is further configured to execute a response operation of responding to the swipe gesture event after the processor (102) receives the swipe gesture event.

15. A computer program, or a recording medium readable by a computer and having recorded thereon a computer program, including instructions for executing the steps of a gesture operation response method according to any one of claims 1 to 8 when said program is executed by a computer.

## Patentansprüche

1. Verfahren zum Ansprechen auf Gestenoperationen, angewendet auf ein intelligentes Gerät, das ein Berührung erfassendes Modul und einen Prozessor umfasst, wobei das Berührung erfassende Modul einen Berührungssensor umfasst, wobei das Verfahren Folgendes beinhaltet:
Melden (201) dem Prozessor, durch das Berührung erfassende Modul, eines Haltegestenereignisses, wenn identifiziert wird, dass eine Zeitdauer, für die ein Zeigemittel nach einer Wischgeste auf dem Berührungssensor auf einem Kontaktpunkt des Berührungssensors bleibt, eine vorbestimmte Zeitdauer erreicht; und
wiederholtes Ausführen (202) durch den Prozessor, nach dem Empfang des Haltegestenereignisses und vor dem Identifizieren durch das Berührung erfassende Modul, dass das Zeigemittel den Kontaktpunkt verlässt, in einem voreingestellten Zeitintervall, einer letzten Ansprechoperation des Ansprechens auf ein von dem Berührung erfassenden Modul gemeldetes Wischgestenereignis, wobei das Wischgestenereignis ein Ereignis ist, das von der Wischgeste des Zeigemittels erzeugt wird, bevor das Zeigemittel auf dem Kontaktpunkt bleibt, und wobei die Ansprechoperation durch eine durch die Wischgeste bediente Anwendung bestimmt wird,
wobei das voreingestellte Zeitintervall der von der Wischgeste bedienten Anwendung entspricht und unterschiedliche Anwendungen oder unterschiedliche Implementationen in einer Anwendung unterschiedliche voreingestellte Zeitintervalle benutzen.

2. Verfahren nach Anspruch 1, das ferner Folgendes beinhaltet:
Messen, durch das Berührung erfassende Modul, einer Zeitdauer, für die der Kontaktpunkt kontinuierlich berührt wird, beim Identifizieren, dass das Zeigemittel den Kontaktpunkt auf dem Berührungssensor berührt, und Feststellen, dass die Zeitdauer, für die das Zeigemittel auf dem Kontaktpunkt bleibt, die voreingestellte Zeitdauer erreicht, wenn die gemessene Zeitdauer die voreingestellte Zeitdauer erreicht.

3. Verfahren nach einem vorherigen Anspruch, das ferner Folgendes beinhaltet:
Melden (305) an den Prozessor, durch das Berührung erfassende Modul, eines Abhebegestenereignisses, wenn das Berührung erfassende Modul beobachtet, dass das Zeigemittel den Kontaktpunkt verlässt und den Berührungssensor nicht mehr berührt; und
Stoppen (306) der Ausführung durch den Prozessor, nach dem Empfang des Abhebegestenereignisses, des Schrittes des Ausführens, in voreingestellten Zeitintervallen, der letzten Ansprechoperation des Ansprechens auf das von dem Berührung erfassenden Modul gemeldete Wischgestenereignis.

4. Verfahren nach einem vorherigen Anspruch, wobei das Zeigemittel ein Finger ist, wobei das Verfahren ferner Folgendes beinhaltet:
Überwachen, durch das Berührung erfassende Modul, eines Fingerabdrucks, der erzeugt wird, wenn der Kontaktpunkt vom Finger berührt wird; und
Feststellen durch das Berührung erfassende Modul, dass der Finger den Kontaktpunkt verlässt und den Berührungssensor nicht mehr berührt, wenn beobachtet wird, dass der beim Berühren des Kontaktpunkts erzeugte Fingerabdruck verschwindet.

5. Verfahren nach einem vorherigen Anspruch, wobei das Melden (201) an den Prozessor, durch das Berührung erfassende Modul, des Haltegestenereignisses beim Identifizieren, dass die Zeitdauer, während der das Zeigemittel auf dem Kontaktpunkt bleibt, nachdem die Wischgeste auf dem Berührungssensor die voreingestellte Zeitdauer erreicht, Folgendes beinhaltet:
Melden (301) an den Prozessor, durch das Berührung erfassende Modul, des Wischgestenereignisses entsprechend der Wischgeste beim Identifizieren der Wischgeste, die erzeugt wird, wenn das Zeigemittel den Berührungssensor berührt;
Melden (303) des Haltegestenereignisses durch das Berührung erfassende Modul, nach dem Melden des Wischgestenereignisses und vor dem Identifizieren, dass das Zeigemittel den Berührungssensor nicht mehr berührt, wenn identifiziert wird, dass das Zeigemittel für die voreingestellte Zeitdauer auf demselben Kontaktpunkt auf dem Berührungssensor bleibt.

6. Verfahren nach Anspruch 5, das ferner Folgendes beinhaltet:
Ausführen (302), durch den Prozessor, einer Ansprechoperation des Ansprechens auf das Wischgestenereignis nach dem Empfang des Wischgestenereignisses.

7. Verfahren nach einem vorherigen Anspruch, wobei der Berührungssensor ein Fingerabdruckerfasser ist, der sich auf einer Rückseite des intelligenten Gerätes befindet.

8. Verfahren nach einem vorherigen Anspruch, das ferner Folgendes umfasst:
Bestimmen der die Ansprechoperation bestimmenden Anwendung;
Bestimmen des Wertes des voreingestellten Zeitintervalls durch:
Abfragen, durch den Prozessor, eines voreingestellten Zeitintervalls entsprechend der Anwendung und/oder Abfragen, durch den Prozessor, eines voreingestellten Zeitintervalls entsprechend einer aktuell angezeigten Seite der Anwendung.

9. Intelligentes Gerät (100), das eine Vorrichtung zum Ansprechen auf eine Gestenoperation, ein Berührung erfassendes Modul (101) und einen Prozessor (102) umfasst, wobei das Berührung erfassende Modul (101) einen Berührungssensor (101a) umfasst, wobei die Vorrichtung zum Ansprechen auf eine Gestenoperation Folgendes umfasst:
ein erstes Meldemodul (410, 510), konfiguriert zum Steuern des Berührung erfassenden Moduls (101) zum Melden eines Haltegestenereignisses an den Prozessor (102), wenn über das Berührung erfassende Modul (101) identifiziert wird, dass eine Zeitdauer, für die ein Zeigemittel nach einer Wischgeste auf dem Berührungssensor (101a) auf einem Kontaktpunkt bleibt, eine voreingestellte Zeitdauer erreicht; und
ein Ansprechmodul (420, 520), konfiguriert zum Steuern des Prozessors (102), wenn dieser das Haltegestenereignis empfängt und bevor das Berührung erfassende Modul (101) identifiziert, dass das Zeigemittel den Kontaktpunkt verlässt, zum wiederholten Ausführen, in einem voreingestellten Zeitintervall, einer letzten Ansprechoperation des Ansprechens auf ein von dem Berührung erfassenden Modul (101) gemeldetes Wischgestenereignis, wobei das Wischgestenereignis ein Ereignis ist, das von der Wischgeste des Zeigemittels erzeugt wird, bevor das Zeigemittel auf dem Kontaktpunkt bleibt, und wobei die Ansprechoperation von einer durch die Wischgeste bedienten Anwendung bestimmt wird,
wobei das voreingestellte Zeitintervall der von der Wischgeste bedienten Anwendung entspricht und unterschiedliche Anwendungen oder unterschiedliche Implementationen in einer Anwendung unterschiedliche voreingestellte Zeitintervalle benutzen.

10. Intelligentes Gerät nach Anspruch 9, wobei die Vorrichtung zum Ansprechen auf eine Gestenoperation ferner Folgendes umfasst:
ein erstes Bestimmungsmodul (530), konfiguriert zum Messen einer Zeitdauer, für die der Kontaktpunkt kontinuierlich berührt wird, wenn das Berührung erfassende Modul (101) identifiziert, dass das Zeigemittel den Kontaktpunkt auf dem Berührungssensor (101a) berührt, und zum Feststellen, dass die Zeitdauer, für die das Zeigemittel auf dem Kontaktpunkt bleibt, die voreingestellte Zeitdauer erreicht, wenn die gemessene Zeitdauer die voreingestellte Zeitdauer erreicht.

11. Smart-Gerät nach Anspruch 9 oder 10, wobei die Vorrichtung zum Ansprechen auf die Gestenoperation ferner Folgendes umfasst:
ein zweites Meldemodul (540), konfiguriert zum Steuern des Berührung erfassenden Moduls (101) zum Melden eines Abhebegestenereignisses an den Prozessor (102), wenn das Berührung erfassende Modul (101) beobachtet, dass das Zeigemittel den Kontaktpunkt verlässt und den Berührungssensor (101a) nicht mehr berührt; und
ein Stoppsteuermodul (550), konfiguriert zum Steuern des Prozessors (102), nachdem dieser das Abhebegestenereignis empfangen hat, zum Stoppen der Ausführung des Schrittes des Ausführens, in voreingestellten Zeitintervallen, der letzten Ansprechoperation des Ansprechens auf das von dem Berührung erfassenden Modul (101) gemeldete Wischgestenereignis.

12. Intelligentes Gerät nach einem der Ansprüche 9 bis 11, wobei das Zeigemittel ein Finger ist, wobei die Vorrichtung ferner Folgendes umfasst:
ein Beobachtungsmodul (560), konfiguriert zum Beobachten, über das Berührung erfassende Modul (101), eines Fingerabdrucks, der erzeugt wird, wenn der Kontaktpunkt vom Finger berührt wird; und
ein zweites Bestimmungsmodul (570), konfiguriert zum Bestimmen, dass der Finger den Kontaktpunkt verlässt und den Berührungssensor (101a) nicht mehr berührt, wenn das Beobachtungsmodul (560) aufgrund des Berührung erfassenden Moduls (101) feststellt, dass der beim Berühren des Kontaktpunkts erzeugte Fingerabdruck verschwindet.

13. Intelligentes Gerät nach einem der Ansprüche 9 bis 12, wobei das erste Meldemodul (510) Folgendes umfasst:
ein erstes Meldesubmodul (511), konfiguriert zum Melden, an den Prozessor (102), des Wischgestenereignisses entsprechend der Wischgeste, wenn das Berührung erfassende Modul (101) die Wischgeste identifiziert, die erzeugt wird, wenn das Zeigemittel den Berührungssensor (101a) berührt; und
ein zweites Meldesubmodul (512), konfiguriert zum Melden an den Prozessor (102), nachdem das Berührung erfassende Modul (101) das Wischgestenereignis gemeldet hat und bevor identifiziert wird, dass das Zeigemittel den Berührungssensor (101a) nicht mehr berührt, des Haltegestenereignisses, wenn identifiziert wird, dass das Zeigemittel für die voreingestellte Zeitdauer auf demselben Kontaktpunkt auf dem Berührungssensor (101a) bleibt.

14. Intelligentes Gerät nach Anspruch 12, wobei
das Ansprechmodul (520) ferner zum Ausführen einer Ansprechoperation des Ansprechens auf das Wischgestenereignis konfiguriert ist, nachdem der Prozessor (102) das Wischgestenereignis empfängt.

15. Computerprogramm oder Aufzeichnungsmedium, das von einem Computer gelesen werden kann und auf dem ein Computerprogramm aufgezeichnet ist, mit Befehlen zum Ausführen der Schritte eines Verfahrens zum Ansprechen auf eine Gestenoperation nach einem der Ansprüche 1 bis 8, wenn das genannte Programm von einem Computer ausgeführt wird.

## Revendications

1. Procédé de réponse à une opération gestuelle, appliqué à un équipement intelligent comprenant un module de détection tactile et un processeur, le module de détection tactile comprenant un capteur tactile, le procédé comprenant :
le rapport (201), par le module de détection tactile, au processeur, d'un événement de geste de maintien quand il reconnaît que la durée de maintien d'un moyen de pointage au niveau d'un point de contact du capteur tactile, après un geste de glissement sur le capteur tactile, atteint une durée prédéterminée ; et
après la réception de l'événement de geste de maintien et avant que le module de détection tactile reconnaisse que le moyen de pointage quitte le point de contact, l'exécution répétée (202), par le processeur, à un intervalle de temps prédéterminé, d'une dernière opération de réponse consistant à répondre à un événement de geste de glissement rapporté par le module de détection tactile, l'événement de geste de glissement étant un événement généré à partir du geste de glissement du moyen de pointage avant que le moyen de pointage séjourne au niveau du point de contact, et l'opération de réponse étant déterminée par une application déclenchée par le geste de glissement,
dans lequel l'intervalle de temps prédéterminé correspond à l'application déclenchée par le geste de glissement, et différentes applications ou différentes mises en œuvre dans une application utilisent différents intervalles de temps prédéterminés.

2. Procédé selon la revendication 1, comprenant en outre :
la mesure, par le module de détection tactile, de la durée de toucher continu du point de contact lorsqu'il reconnaît que le moyen de pointage touche le point de contact sur le capteur tactile, et la détermination que la durée de séjour du moyen de pointage au niveau du point de contact atteint la durée prédéterminée quand la durée mesurée atteint la durée prédéterminée.

3. Procédé selon n'importe quelle revendication précédente, comprenant en outre :
le rapport (305), par le module de détection tactile, au processeur, d'un événement de geste de levée quand le module de détection tactile surveille que le moyen de pointage quitte le point de contact et ne touche plus le capteur tactile ; et
à la réception de l'événement de geste de levée, l'arrêt (306), par le processeur, de l'étape d'exécution à des intervalles de temps prédéterminés de la dernière opération de réponse consistant à répondre à l'événement de geste de glissement rapporté par le module de détection tactile.

4. Procédé selon n'importe quelle revendication précédente, dans lequel le moyen de pointage est un doigt, le procédé comprenant en outre :
la surveillance, par le module de détection tactile, d'une empreinte digitale générée quand le point de contact est touché par le doigt ; et
la détermination, par le module de détection tactile, que le doigt quitte le point de contact et ne touche plus le capteur quand la surveillance établit que l'empreinte numérique générée lorsque le point de contact est touché disparaît.

5. Procédé selon n'importe quelle revendication précédente, dans lequel le rapport (201), par le module de détection tactile, au processeur, de l'événement de geste de maintien quand il reconnaît que la durée de maintien d'un moyen de pointage au niveau d'un point de contact du capteur tactile, après un geste de glissement sur le capteur tactile, atteint une durée prédéterminée comprend :
le rapport (301), par le module de détection tactile, au processeur, de l'événement de geste de glissement correspondant au geste de glissement lorsqu'il reconnaît le geste de glissement généré quand le moyen de pointage touche le capteur tactile ;
après le rapport de l'événement de geste de glissement et avant la reconnaissance que le moyen de pointage cesse de toucher le capteur tactile, le rapport (303), par le module de détection tactile, de l'événement de geste de maintien s'il reconnaît que le moyen de pointage séjourne au niveau du même point de contact sur le capteur tactile pendant la durée prédéterminée.

6. Procédé selon la revendication 5, comprenant en outre :
l'exécution (302), par le processeur, d'une opération de réponse consistant à répondre à l'événement de geste de glissement après la réception de l'événement de geste de glissement.

7. Procédé selon n'importe quelle revendication précédente, dans lequel le capteur tactile est un dispositif d'acquisition d'empreinte digitale situé sur un dos de l'équipement intelligent.

8. Procédé selon n'importe quelle revendication précédente, comprenant en outre :
la détermination de l'application déterminant l'opération de réponse ;
la détermination de la valeur des intervalles prédéterminés en :
interrogeant, par le processeur, un intervalle de temps prédéterminé correspondant à l'application et/ou interrogeant, par le processeur, un intervalle de temps prédéterminé correspondant à une page présentement affichée de l'application.

9. Equipement intelligent (100) comprenant un dispositif de réponse à une opération gestuelle, un module de détection tactile (101) et un processeur (102), le module de détection tactile (101) comprenant un capteur tactile (101a), dans lequel le dispositif de réponse à une opération gestuelle comprend :
un premier module de rapport (410, 510) configuré pour commander au module de détection tactile (101) de rapporter au processeur (102) un événement de geste de maintien reconnu quand le module de détection tactile (101) reconnaît qu'une durée de maintien d'un moyen de pointage au niveau d'un point de contact après un geste de glissement sur le capteur tactile (101a) atteint une durée prédéterminée ; et
un module de réponse (420, 520) configuré pour, après que le processeur (102) reçoit l'événement de geste de maintien et avant que le module de détection tactile (101) reconnaisse que le moyen de pointage quitte le point de contact, commander au processeur (102) d'exécuter de manière répétée, à un intervalle de temps prédéterminé, une dernière opération de réponse consistant à répondre à un événement de geste de glissement rapporté par le module de détection tactile (101), l'événement de geste de glissement étant un événement généré à partir du geste de glissement du moyen de pointage avant que le moyen de pointage séjourne au niveau du point de contact, et l'opération de réponse étant déterminée par une application déclenchée par le geste de glissement,
dans lequel l'intervalle de temps prédéterminé correspond à l'application déclenchée par le geste de glissement, et différentes applications ou différentes mises en œuvre dans une application utilisent différents intervalles de temps prédéterminés.

10. Equipement intelligent selon la revendication 9, dans lequel le dispositif de réponse à une opération gestuelle comprend en outre :
un premier module de détermination (530) configuré pour mesurer une durée pendant laquelle le point de contact est touché continûment quand le module de détection tactile (101) reconnaît que le moyen de pointage touche le point de contact sur le capteur tactile (101a), et déterminer que la durée de séjour du moyen de pointage au niveau du point de contact atteint la durée prédéterminée quand la durée mesurée atteint la durée prédéterminée.

11. Equipement intelligent selon la revendication 9 ou 10, dans lequel le dispositif de réponse à une opération gestuelle comprend en outre :
un second module de rapport (540) configuré pour commander au module de détection tactile (101) de rapporter au processeur (102) un événement de geste de levée quand le module de détection tactile (101) surveille que le moyen de pointage quitte le point de contact et ne touche plus le capteur tactile (101a) ; et
un module de commande d'arrêt (550) configuré pour, après que le processeur (102) reçoit l'événement de geste de levée, commander au processeur (102) d'arrêter l'exécution de l'étape d'exécution, à des intervalles prédéterminés, de la dernière opération de réponse consistant à répondre à l'événement de geste de glissement rapporté par le module de détection tactile (101).

12. Equipement intelligent selon l'une quelconque des revendications 9 à 11, dans lequel le moyen de pointage est un doigt, le dispositif comprenant en outre :
un module de surveillance (560) configuré pour surveiller, au moyen du module de détection tactile (101), une empreinte digitale générée quand le point de contact est touché par le doigt ; et
un second module de détermination (570) configuré pour déterminer que le doigt quitte le point de contact et ne touche plus le capteur tactile (101a) quand le module de surveillance (560) surveille au moyen du module de détection tactile (101) que l'empreinte digitale générée quand le point de contact est touché disparaît.

13. Equipement intelligent selon l'une quelconque des revendications 9 à 12, dans lequel le premier module de rapport (510) comprend :
un premier sous-module de rapport (511) configuré pour rapporter au processeur (102) l'événement de geste de glissement correspondant au geste de glissement quand le module de détection tactile (101) identifie le geste de glissement généré quand le moyen de pointage touche le capteur tactile (101a) ; et
un second sous-module de rapport (512) configuré pour, après que le module de détection tactile (101) rapporte l'événement de geste de glissement avant qu'il soit reconnu que le moyen de pointage cesse de toucher le capteur tactile (101a), rapporter au processeur (102) l'événement de geste de maintien s'il est reconnu que le moyen de pointage séjourne au niveau du même point de contact sur le capteur tactile (101a) pendant la durée prédéterminée

14. Equipement intelligent selon la revendication 12, dans lequel
le module de réponse (520) et configuré en outre pour exécuter une opération de réponse consistant à répondre à l'événement de geste de glissement après que le processeur (102) reçoit l'événement de geste de glissement.

15. Programme informatique, ou support d'enregistrement lisible par un ordinateur et sur lequel est enregistré un programme informatique, comportant des instructions pour exécuter les étapes d'un procédé de réponse à une opération gestuelle selon l'une quelconque des revendications 1 à 8 quand ledit programme est exécuté par un ordinateur.
